# FASCICULE DE BREVET EUROPEEN

(11) **EP 3 763 018 B1**
(45) Date de publication et mention de la délivrance du brevet: **30.11.2022**
(21) Numéro de dépôt: 19706683.0
(22) Date de dépôt: 27.02.2019
(51) Int. Cl.: H02K 3/12, H02K 3/28

(54) **MACHINE ÉLECTRIQUE TOURNANTE À BOBINAGE FRACTIONNÉ**
DREHENDE ELEKTRISCHE MASCHINE MIT BRUCHLOCHWICKLUNG
ROTATING ELECTRICAL MACHINE WITH FRACTIONAL WINDING

(30) Priorité: 05.03.2018 FR 1851886
(43) Date de publication de la demande: 13.01.2021
(73) Titulaire: VALEO EQUIPEMENTS ELECTRIQUES MOTEUR, 94046 Créteil Cedex (FR)
(72) Inventeur: LEGRANGER, Jérome, 94046 CRETEIL CEDEX (FR); FARAH, Philippe-Siad, 94046 CRETEIL (FR); FRATILA, Radu, 94046 CRETEIL CEDEX (FR)
(74) Mandataire: Valeo Powertrain Systems
(86) Numéro de dépôt international: PCT/EP2019/054789
(87) Numéro de publication internationale: WO 2019/170482

(56) Documents cités:
- DE-A1- 3 202 958
- DE-A1-102016 105 549
- DE-A1-102016 111 212
- US-A- 4 550 267

## Description

La présente invention porte sur une machine électrique tournante. L'invention trouve une application particulièrement avantageuse avec les machines électriques à basse tension, c'est-à-dire avec les machines électriques fonctionnant à une tension inférieure à 60 Volts. La machine électrique est destinée à être utilisée dans un véhicule automobile, notamment de type hybride.

De façon connue en soi, les machines électriques tournantes comportent un stator et un rotor solidaire d'un arbre. Le rotor pourra être solidaire d'un arbre menant et/ou mené et pourra appartenir à une machine électrique tournante sous la forme d'un alternateur, d'un moteur électrique, ou d'une machine réversible pouvant fonctionner dans les deux modes.

Le rotor comporte un corps formé par un empilage de feuilles de tôles maintenues sous forme de paquet au moyen d'un système de fixation adapté. Le rotor comporte des pôles formés par exemple par des aimants permanents logés dans des cavités ménagées dans le corps.

Le stator est monté dans un carter configuré pour porter à rotation l'arbre par l'intermédiaire de roulements. Le stator comporte un corps muni d'une pluralité de dents définissant des encoches, et un bobinage inséré dans les encoches du stator. Le bobinage est obtenu par exemple à partir de fils continus recouverts d'émail ou à partir d'éléments conducteurs en forme d'épingles reliées entre elles par soudage. Alternativement, les phases de la machine sont formées à partir de bobines individuelles enroulées chacune autour d'une dent statorique.

Afin d'assurer la commande de la machine électrique tournante, un module de contrôle, qui interagit avec le calculateur moteur, pilote le passage du courant à l'intérieur de bras de pont reliés aux différentes phases de la machine. Ces bras de pont intègrent des éléments redresseurs prenant généralement la forme de transistors MOS. La commande des bras de pont est effectuée notamment en fonction de la température du stator, de la position et de la vitesse du rotor, ainsi que de paramètres de fonctionnement du moteur thermique fournis par le calculateur moteur. Les bras de pont peuvent fonctionner en mode onduleur ou en mode redresseur de tension. Classiquement, la puissance d'une machine électrique basse tension alimentée par la batterie d'un véhicule automobile est de l'ordre de 15kW à 30kW. Afin d'augmenter cette puissance, il est connu de redimensionner les bras de pont pour pouvoir supporter l'augmentation de l'intensité du courant circulant dans la machine. Cela pose toutefois des problèmes de coûts liés au développement de modules spécifiques ainsi que des problèmes d'intégration du bloc électronique du fait de leur encombrement important.

Des machines électriques tournantes comportant un rotor ayant un nombre de paires de pôles pair, un stator comportant un corps muni d'encoches et un bobinage triphasé inséré dans lesdites encoches dudit corps de stator, ledit bobinage triphasé comprenant: au moins un premier groupe de portions de phases et un deuxième groupe de portions de phases associés à un premier ensemble d'au moins trois bras de pont, et au moins un troisième groupe de portions de phases et un quatrième groupe de portions de phases associés à un deuxième ensemble d'au moins trois bras de pont sont décrit dans le brevet US4550267 A ou rendu évident par les brevets DE 102016111212 A, DE 102016105549 A ou DE3202958 A.

L'invention vise à remédier efficacement à ces inconvénients en proposant une machine électrique tournante pour véhicule automobile, caractérisée en ce qu'elle comporte:
- un rotor ayant un nombre de paires de pôles pair,
- un stator comportant un corps muni d'encoches et un bobinage triphasé inséré dans lesdites encoches dudit corps de stator, ledit bobinage triphasé comprenant:
   - au moins un premier groupe de portions de phases et un deuxième groupe de portions de phases associés à un premier ensemble d'au moins trois bras de pont, chaque portions de phase du premier groupe étant connecté en série respectivement avec chaque portion de phase du deuxième groupe,
   - au moins un troisième groupe de portions de phases et un quatrième groupe de portions de phases associés à un deuxième ensemble d'au moins trois bras de pont, chaque portions de phase du troisième groupe étant connecté en série respectivement avec chaque portion de phase du quatrième groupe, et
dans laquelle suivant une circonférence du stator, il existe une alternance entre un groupe de portions de phases du premier, ensemble de bras de pont et un groupe de portions de phases du deuxième ensemble de bras de pont.

L'invention permet ainsi, en utilisant deux onduleurs au lieu d'un seul et en fractionnant le bobinage en plusieurs groupes de portions de phases, de faciliter l'intégration du système en autorisant l'utilisation de bras de pont standards. En outre, cela facilite la fabrication et la maintenance de la machine électrique. L'invention limite également les pertes magnétiques et le bruit acoustique tout en minimisant les ondulations de couple de la machine électrique, et ce sans avoir à modifier la configuration du rotor du fait de la faible présence d'harmoniques. L'invention permet également de réaliser une machine électrique compacte.

Selon une réalisation, chaque groupe de portions de phases comporte dans au moins une même encoche deux conducteurs appartenant à des phases différentes.

Selon une réalisation, chaque groupe de portions de phases comporte au moins deux conducteurs appartenant à une même phase dans au moins deux encoches adjacentes.

Selon une réalisation, le nombre d'encoches par pôle et par phase est strictement supérieur à 1 et inférieur ou égal à 3.

Selon une réalisation, le nombre d'encoches par pôle et par phase est égal à 2.5.

Selon une réalisation, pour un stator triphasé comportant quatre groupes de portions de phases, les groupes de portions de phases associés à un même ensemble de bras de pont sont diamétralement opposés l'un par rapport à l'autre.

Selon une réalisation, le rotor comporte un nombre de paires de pôles sélectionné parmi: 4, 6, 8, 10, ou 12.

Selon une réalisation, le bobinage est du type à épingles comportant une section de forme sensiblement rectangulaire. Par "sensiblement", on entend le fait que le rectangle pourra présenter des coins arrondis pour éviter de blesser les fils lors de l'insertion dans les encoches du stator.

Selon une réalisation, le rotor est un rotor à aimants permanents, un rotor bobiné, ou un rotor mixte.

Selon une réalisation, ladite machine électrique tournante présente une tension de fonctionnement inférieure à 60 Volts.

L'invention sera mieux comprise à la lecture de la description qui suit et à l'examen des figures qui l'accompagnent. Ces figures ne sont données qu'à titre illustratif mais nullement limitatif de l'invention.
La figure 1 montre une vue en perspective partielle d'un quart de stator utilisé dans une machine électrique tournante selon la présente invention;
La figure 2 est une représentation schématique des différents groupes de portions de phases du bobinage triphasé fractionné selon la présente invention;
La figure 3 est une représentation schématique de la connexion des différents groupes de portions de phases du bobinage selon l'invention avec deux ensembles de bras de pont correspondants;
Les figures 4a et 4b sont des représentations graphiques du niveau des harmoniques obtenues respectivement avec un bobinage de type concentré standard et un bobinage triphasé fractionné selon l'invention ;
La figure 5 est une représentation graphique des ondulations en couple obtenue avec une machine électrique tournante selon l'invention;
La figure 6 illustre la disposition, suivant une circonférence du stator, des groupes de portions de phases associés à deux ensembles de bras de pont distincts;
La figure 7 est une vue en coupe longitudinale d'une machine électrique tournante selon l'invention.

Les éléments identiques, similaires, ou analogues conservent la même référence d'une figure à l'autre.

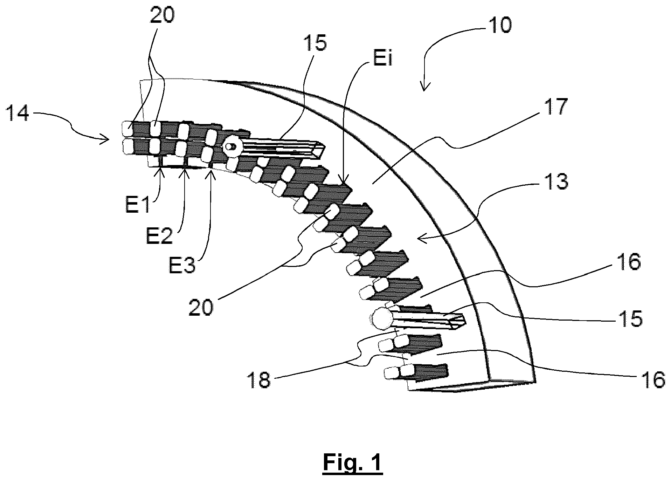

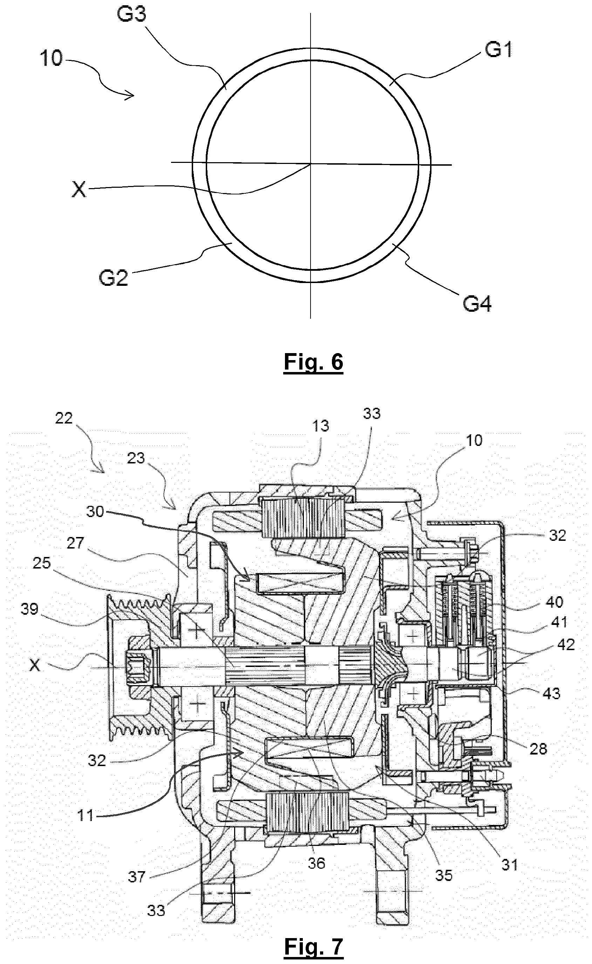

La figure 1 montre une portion de stator bobiné 10 d'une machine électrique tournante selon l'invention. Le stator 10 est destiné à entourer un rotor 11 visible en figure 7 avec présence d'un entrefer entre la périphérie externe du rotor 11 et la périphérie interne du stator 10. Le rotor 11 comporte un nombre de paires de pôles pair. Le nombre de paires de pôles est avantageusement sélectionné parmi: 4, 6, 8, 10, ou 12.

Le stator 10 est destiné à être fixé sur un carter (non représenté) configuré pour porter à rotation l'arbre du rotor 11 via des roulements à billes et/ou à aiguilles. Avantageusement, la machine électrique tournante est de type synchrone et présente une puissance comprise entre 25 et 30 kW.

Plus précisément, le stator 10 comporte un corps 13 et un bobinage 14 polyphasé, notamment triphasé, inséré à l'intérieur d'encoches Ei du corps 13. Le corps de stator 13 consiste en un empilement axial de tôles planes maintenues ensemble à l'aide d'un système de fixation adapté comprenant par exemple des rivets 15. Le corps de stator 13 comporte des dents 16 réparties angulairement de manière régulière sur une périphérie interne d'une culasse 17. Ces dents 16 délimitent les encoches Ei (i étant un nombre entier), de telle façon que chaque encoche Ei est délimitée par deux dents 16 successives. Les encoches Ei débouchent axialement dans les faces d'extrémité axiales du corps de stator 13. Les encoches Ei sont également ouvertes radialement vers l'intérieur du corps de stator 13. Le stator 10 pourra être muni de pieds de dent 18 du côté des extrémités libres des dents 16. Chaque pied de dent 18 s'étend circonférentiellement de part et d'autre d'une dent 16 correspondante.

Dans l'exemple représenté, le bobinage 14 est réalisé à partir de conducteurs 20 constitués par des épingles globalement en forme de U. Généralement, on insère des branches axiales de conducteurs 20 à l'intérieur des encoches Ei. L'empilage radial des branches à l'intérieur des encoches Ei comporte une couche externe de conducteurs 20 et une couche interne de conducteurs 20. Autrement dit, le stator 10 comporte deux conducteurs 20 par encoche Ei. Les extrémités libres des conducteurs 20 sont reliées électriquement entre elles notamment par soudage, notamment de type laser. Les conducteurs 20 présentent ici une section de forme sensiblement rectangulaire pour optimiser le remplissage des encoches, mais pourrait en variante présenter une section de forme ronde.

En variante, le bobinage 14 pourra être obtenu à partir de fils conducteurs continu formant des ondulations à l'intérieur des encoches du stator 10. Dans tous les cas, les conducteurs 20 sont avantageusement réalisés en cuivre recouvert d'une couche d'émail, ou éventuellement en aluminium.

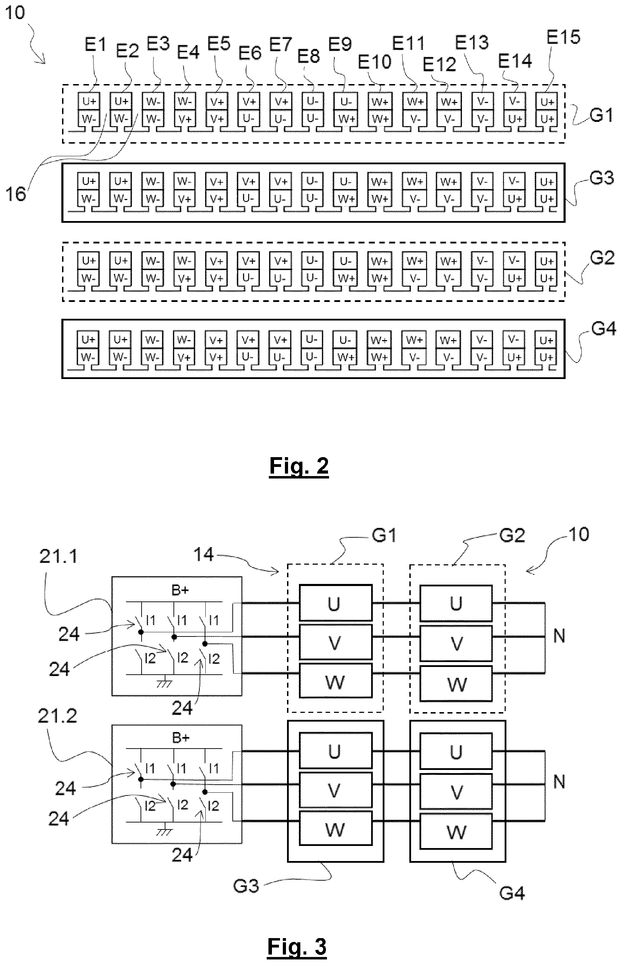

Comme on peut le voir sur les figures 2 et 3, le bobinage 14 comporte avantageusement trois phases U, V, W fragmentées en plusieurs groupes G1, G2, G3, G4 de portions de phases associés à deux ensembles de bras de pont distincts 21.1 et 21.2. Sur la figure 2, le terme "+" correspond à l'entrée du courant et au terme "-" correspondant à la sortie du courant dans les phases.

Chaque ensemble 21.1, 21.2 comporte de façon classique trois bras de pont 24, soit un bras de pont 24 par phase. Un bras de pont est formé de deux interrupteurs commandés I1 et I2 pour connecter sélectivement la phase correspondante U, V, W au potentiel positif B+ d'alimentation de la machine ou à la masse. Les bras de pont 24 connectés aux phases sont commandés par un module de contrôle. Chaque interrupteur I1, I2 pourra être constitué par un transistor de puissance, par exemple de type MOS, associé de préférence à une diode de roue libre.

Avantageusement, tel que cela est montré sur la figure 3, un premier groupe G1 de portions de phases U, V, W et un deuxième groupe G2 de portions de phases U, V, W sont associés à l'ensemble 21.1. Un troisième groupe G3 de portions de phases U, V, W et un quatrième groupe G4 de portions de phases U, V, W sont associés à l'ensemble 21.2. Une portion de phase correspond à une partie de bobinage d'une phase donnée U, V, W s'étendant sur une partie de la circonférence du corps de stator 13.

En l'occurrence, pour les groupes G1 et G2 connectés au premier ensemble de bras de pont 21.1, la portion de la phase U du premier groupe G1 est connectée en série avec la portion de la phase U du deuxième groupe G2. La portion de la phase V du premier groupe G1 est connectée en série avec la portion de la phase V du deuxième groupe G2. La portion de la phase W du premier groupe G1 est connectée en série avec la portion de la phase W du deuxième groupe G2.

Pour les groupes G3 et G4 connectés au deuxième ensemble de bras de pont 21.2, la portion de la phase U du troisième groupe G3 est connectée en série avec la portion de la phase U du quatrième groupe G4. La portion de la phase V du troisième groupe G3 est connectée en série avec la portion de la phase V du quatrième groupe G4. La portion de la phase W du troisième groupe G3 est connectée en série avec la portion de la phase W du quatrième groupe G4.

Les phases U, V, W sont couplées avantageusement en étoile. Les points neutres N des deux ensembles de bras de pont 21.1, 21.2 sont de préférence séparés afin d'éviter toute recirculation d'harmoniques entre les deux ensembles 21.1, 21.2. En variante, les points neutres N pourraient toutefois être confondus.

Comme on peut le voir sur la figure 2, chaque groupe G1, G2, G3, G4 de portions de phases U, V, W comporte, dans au moins une même encoche Ei, deux conducteurs 20 appartenant à des phases différentes. Ainsi, dans chaque groupe G1, G2, G3, G4, les encoches E1, E2, et E9 contiennent des conducteurs 20 associés respectivement à la phase U et à la phase W; les encoches E4, E11, et E12 contiennent des conducteurs 20 associés respectivement à la phase V et à la phase W; les encoches E6, E7, et E14 contiennent des conducteurs 20 associés respectivement à la phase U et à la phase V.

En outre, chaque groupe G1, G2, G3, G4 de portions de phases U, V, W comporte au moins deux conducteurs 20 appartenant à une même phase dans au moins deux encoches adjacentes, c'est-à-dire deux encoches Ei disposées l'une à côté de l'autre et séparées par une dent 16 commune.

Dans l'exemple représenté, des conducteurs 20 associés à la phase U sont ainsi disposés dans les encoches E1, E2, E6, E7, E8, E9 et E15. Des conducteurs 20 associés à la phase V sont disposés dans les encoches E4, E5, E6, E7, et E11, E12, E13, E14. Des conducteurs 20 associés à la phase W sont disposés dans les encoches E1, E2, E3, E4, E9, E10, E11, et E12.

Suivant une circonférence du stator 10, il existe une alternance entre un groupe de portions de phases du premier ensemble de bras de pont 21.1 et un groupe de portions de phases du deuxième ensemble de bras de pont 21.2. Ainsi, comme on peut le voir sur la figure 6, pour un stator 10 triphasé comportant quatre groupes G1, G2; G3, G4 de portions de phases, les groupes de portions de phases associés à un même ensemble de bras de pont 21.1, 21.2 sont diamétralement opposés l'un par rapport à l'autre. Les groupes de portions de phase G1 et G2 associés au premier ensemble 21.1 sont diamétralement opposés l'un par rapport à l'autre et les groupes de portions de phase G3 et G4 associés au deuxième ensemble 21.2 sont diamétralement opposés l'un par rapport à l'autre.

Avantageusement, le nombre d'encoches par pôle et par phase (paramètre dit "spp" pour "splot per pole per phase" en terminologie anglaise) est strictement supérieur à 1 et inférieur ou égal à 3 et de préférence égal à 2.5.

Suivant un mode de réalisation préférentiel non limitatif, la machine comporte un stator 10 triphasé à 60 encoches et une polarité de 4 paires de pôles au rotor 11. Le motif élémentaire de 15 encoches pour chaque groupe G1, G2, G3, et G4 est répété 4 fois. On est alors dans une configuration de 2.5 encoches par pôle et par phase. Les circuits statoriques alimentés par les ensembles de bras de pont distincts 21.1, 21.2 sont de préférence distants d'une paire de pôles.

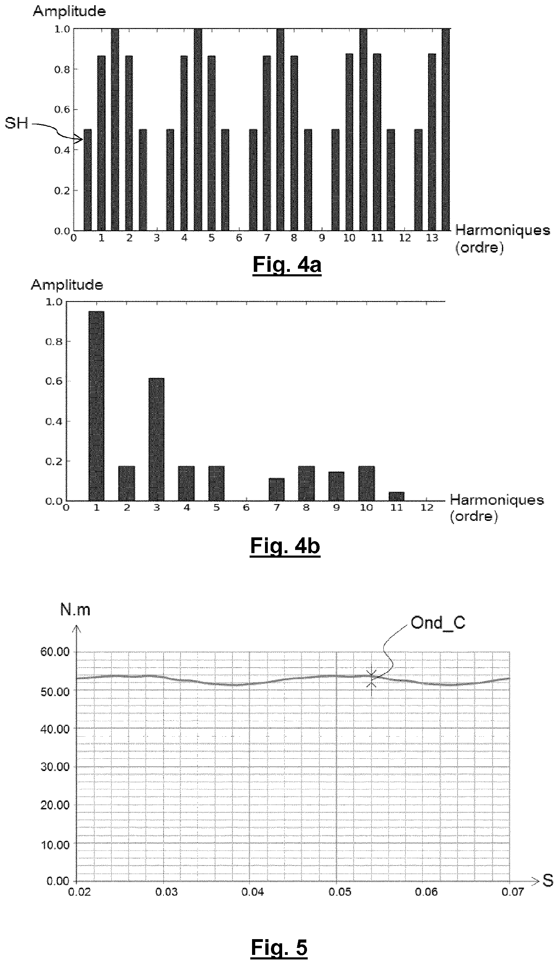

La figure 4a met en évidence qu'une configuration classique de stator 10 muni d'un bobinage concentré, c'est-à-dire formé à partir de bobines enroulées autour des dents 16 du stator 10, à 4 paires de pôles, et 0.5 encoche par pôle et par phase génère des sous-harmonique SH qui engendre des pertes magnétiques importantes. Tel que cela est montré sur la figure 4b, la configuration selon l'invention permet de supprimer les sous-harmoniques générées par le bobinage 14 et de limiter le nombre total des harmoniques ainsi que leur amplitude.

En outre, comme on peut le voir sur la figure 5, l'ondulation de couple Ond_C de la machine électrique selon l'invention est faible. On rappelle que cette ondulation est définie par la différence entre le couple maximal et le couple minimal divisé par le couple moyen. Cette ondulation de couple Ond_C est inférieure ou égale à 5% et ce, sans avoir à modifier la configuration du rotor 11.

Le stator 10 pourra être utilisé avec tout type de rotor 11, notamment un rotor 11 à aimants permanents, un rotor 11 bobiné, ou un rotor 11 mixte comportant des pôles formés par une bobine et au moins un aimant associé.

De façon connue en soi, les aimants pourront être réalisés en ferrite ou en terre rare selon les applications et la puissance recherchée de la machine. Le rotor 11 pourra être à concentration de flux, c'est-à-dire que les faces latérales en vis-à-vis des aimants situés dans deux cavités consécutives sont de même polarité.

On a représenté sur la figure 7 un exemple non limitatif d'implantation du stator 10 selon l'invention à l'intérieur d'un alternateur 22 compact et polyphasé, notamment pour véhicule automobile. L'alternateur 22 est apte à transformer de l'énergie mécanique en énergie électrique et pourra être réversible. Un tel alternateur 22 réversible, appelé alterno-démarreur, permet de transformer de l'énergie électrique en énergie mécanique notamment pour démarrer le moteur thermique du véhicule.

Cet alternateur 22 comporte un carter 23 et, à l'intérieur de celui-ci, un rotor à griffes 11 monté sur un arbre 25 et le stator 10 qui entoure le rotor 11 tout en étant séparé de ce dernier par un entrefer. L'axe X suivant lequel s'étend l'arbre 25 forme l'axe de la machine électrique.

Le carter 23 comporte des paliers avant 27 et arrière 28 portant le stator. Les paliers 27, 28 sont de forme creuse et portent chacun centralement un roulement à billes pour le montage à rotation de l'arbre 25.

Plus précisément, le rotor 11 comporte deux roues polaires 30, 31 présentant chacune un flasque 32 d'orientation transversale pourvu à sa périphérie externe de griffes 33 par exemple de forme trapézoïdale et d'orientation axiale. Les griffes 33 d'une roue 30, 31 sont dirigées axialement vers le flasque 32 de l'autre roue 30, 31. Une griffe 33 d'une roue polaire 30, 31 pénètre ainsi dans l'espace existant entre deux griffes 33 voisines de l'autre roue polaire 30, 31, de sorte que les griffes 33 des roues polaires 30, 31 sont imbriquées les unes par rapport aux autres.

Un noyau cylindrique 35 est intercalé axialement entre les flasques 32 des roues 30, 31. En l'occurrence, le noyau 35 consiste en deux demi-noyaux appartenant chacun à l'un des flasques 32. Ce noyau 35 porte à sa périphérie externe une bobine d'excitation 36 bobinée autour d'un isolant 37 intercalé radialement entre le noyau 35 et la bobine 36.

Du côté de son extrémité avant, l'arbre 25 porte une poulie 39 appartenant à un dispositif de transmission de mouvements à au moins une courroie, ou à chaîne, entre l'alternateur 22 et le moteur thermique du véhicule automobile. Le palier arrière 28 porte un porte-balais 40 muni de balais 41 destinés à venir frotter contre des bagues 42 d'un collecteur 43 pour assurer l'alimentation du bobinage du rotor 11.

Le stator 10 pourra également être intégré à l'intérieur d'autres types de machines électriques, notamment celles fonctionnant en mode moteur uniquement.

Bien entendu, la description qui précède a été donnée à titre d'exemple uniquement et ne limite pas le domaine de l'invention dont on ne sortirait pas en remplaçant les différents éléments par tous autres équivalents.

En outre, les différentes caractéristiques, variantes, et/ou formes de réalisation de la présente invention peuvent être associées les unes avec les autres selon diverses combinaisons, dans la mesure où elles ne sont pas incompatibles ou exclusives les unes des autres. Mais l'invention est définie par les revendications annexées.

## Revendications

1. Machine électrique tournante pour véhicule automobile comporte:
- un rotor (11) ayant un nombre de paires de pôles pair,
- un stator (10) comportant un corps (13) muni d'encoches (Ei) et un bobinage (14) triphasé inséré dans lesdites encoches (Ei) dudit corps de stator (13), ledit bobinage (14) triphasé comprenant:
- au moins un premier groupe (G1) de portions de phases (U, V, W) et un deuxième groupe (G2) de portions de phases (U, V, W) associés à un premier ensemble d'au moins trois bras de pont (21.) et
- au moins un troisième groupe (G3) de portions de phases (U, V, W) et un quatrième groupe (G4) de portions de phases (U, V, W) associés à un deuxième ensemble d'au moins trois bras de pont (21.2), **caractérisé en ce que** chaque portion de phase (U, V, W) du premier groupe (G1) étant connecté en série respectivement avec chaque portion de phase (U, V, W) du deuxième groupe (G2),
chaque portion de phase (U, V, W) du troisième groupe (G3) étant connecté en série respectivement avec chaque portion de phase (U, V, W) du quatrième groupe (G4),
et dans laquelle suivant une circonférence du stator (10), il existe une alternance entre un groupe de portions de phases (G1, G2) du premier ensemble de bras de pont (21.1) et un groupe de portions de phases (G3, G4) du deuxième ensemble de bras de pont (21.2).

2. Machine électrique tournante selon la revendication 1, **caractérisée en ce que**, chaque groupe (G1, G2, G3, G4) de portions de phases (U, V, W) comporte dans au moins une même encoche (Ei) deux conducteurs (20) appartenant à des phases (U, V, W) différentes.

3. Machine électrique tournante selon la revendication 1 ou 2, **caractérisée en ce que** chaque groupe (G1, G2, G3, G4) de portions de phases (U, V, W) comporte au moins deux conducteurs (20) appartenant à une même phase (U, V, W) dans au moins deux encoches (Ei) adjacentes.

4. Machine électrique tournante selon l'une quelconque des revendications 1 à 3, **caractérisée en ce que**, le nombre d'encoches (Ei) par pôle et par phase (U, V, W) est strictement supérieur à 1 et inférieur ou égal à 3.

5. Machine électrique tournante selon la revendication 4, **caractérisée en ce que** le nombre d'encoches (Ei) par pôle et par phase (U, V, W) est égal à 2.5.

6. Machine électrique tournante selon l'une quelconque des revendications 1 à 5, **caractérisée en ce que**, pour un stator (10) triphasé comportant quatre groupes de portions de phases (G1, G2, G3, G4), les groupes de portions de phases associés à un même ensemble de bras de pont (21.1, 21.2) sont diamétralement opposés l'un par rapport àl'autre.

7. Machine électrique tournante selon l'une quelconque des revendications 1 à 6, **caractérisée en ce que** le rotor (11) comporte un nombre de paires de pôles sélectionné parmi: 4, 6, 8, 10, ou 12.

8. Machine électrique tournante selon l'une quelconque des revendications 1 à 7, **caractérisée en ce que** le bobinage (14) est du type à épingles comportant une section de forme sensiblement rectangulaire.

9. Machine électrique tournante selon l'une quelconque des revendications 1 à 8, **caractérisée en ce que** le rotor (11) est un rotor à aimants permanents, un rotor bobiné, ou un rotor mixte.

10. Machine électrique tournante selon l'une quelconque des revendications 1 à 9, **caractérisé en ce qu'**elle présente une tension de fonctionnement inférieure à 60 Volts.

## Patentansprüche

1. Drehende elektrische Maschine für ein Kraftfahrzeug, die aufweist:
- einen Rotor (11) mit einer geraden Anzahl von Polpaaren,
- einen Stator (10), der einen mit Nuten (Ei) versehenen Körper (13) und eine Dreiphasenwicklung (14) aufweist, die in die Nuten (Ei) des Statorkörpers (13) eingefügt ist, wobei die Dreiphasenwicklung (14) enthält:
- mindestens eine erste Gruppe (G1) von Phasenabschnitten (U, V, W) und eine zweite Gruppe (G2) von Phasenabschnitten (U, V, W), die einer ersten Einheit von mindestens drei Brückenarmen (21.2) zugeordnet sind, und
- mindestens eine dritte Gruppe (G3) von Phasenabschnitten (U, V, W) und eine vierte Gruppe (G4) von Phasenabschnitten (U, V, W), die einer zweiten Einheit von mindestens drei Brückenarmen (21.2) zugeordnet sind,
**dadurch gekennzeichnet, dass** jeder Phasenabschnitt (U, V, W) der ersten Gruppe (G1) in Reihe mit jedem Phasenabschnitt (U, V, W) der zweiten Gruppe (G2) verbunden ist, jeder Phasenabschnitt (U, V, W) der dritten Gruppe (G3) in Reihe mit jedem Phasenabschnitt (U, V, W) der vierten Gruppe (G4) verbunden ist,
und wobei es gemäß einem Umfang des Stators (10) eine Wechselfolge zwischen einer Gruppe von Phasenabschnitten (G1, G2) der ersten Einheit von Brückenarmen (21.1) und einer Gruppe von Phasenabschnitten (G3, G4) der zweiten Einheit von Brückenarmen (21.2) gibt.

2. Drehende elektrische Maschine nach Anspruch 1, **dadurch gekennzeichnet, dass** jede Gruppe (G1, G2, G3, G4) von Phasenabschnitten (U, V, W) in mindestens einer gleichen Nut (Ei) zwei Leiter (20) aufweist, die zu unterschiedlichen Phasen (U, V, W) gehören.

3. Drehende elektrische Maschine nach Anspruch 1 oder 2, **dadurch gekennzeichnet, dass** jede Gruppe (G1, G2, G3, G4) von Phasenabschnitten (U, V, W) mindestens zwei Leiter (20) aufweist, die zu einer gleichen Phase (U, V, W) in mindestens zwei benachbarten Nuten (Ei) gehören.

4. Drehende elektrische Maschine nach einem der Ansprüche 1 bis 3, **dadurch gekennzeichnet, dass** die Anzahl von Nuten (Ei) pro Pol und pro Phase (U, V, W) strikt größer als 1 und kleiner als oder gleich 3 ist.

5. Drehende elektrische Maschine nach Anspruch 4, **dadurch gekennzeichnet, dass** die Anzahl von Nuten (Ei) pro Pol und pro Phase (U, V, W) gleich 2,5 ist.

6. Drehende elektrische Maschine nach einem der Ansprüche 1 bis 5, **dadurch gekennzeichnet, dass** für einen Dreiphasenstator (10), der vier Gruppen von Phasenabschnitten (G1, G2, G3, G4) aufweist, die einer gleichen Einheit von Brückenarmen (21.1, 21.2) zugeordneten Gruppen von Phasenabschnitten einander diametral entgegengesetzt sind.

7. Drehende elektrische Maschine nach einem der Ansprüche 1 bis 6, **dadurch gekennzeichnet, dass** der Rotor (11) eine Anzahl von Polpaaren aufweist, die ausgewählt wird unter: 4, 6, 8, 10 oder 12.

8. Drehende elektrische Maschine nach einem der Ansprüche 1 bis 7, **dadurch gekennzeichnet, dass** die Wicklung (14) vom Nadelwicklungstyp ist, die einen im Wesentlichen rechtwinkligen Querschnitt aufweist.

9. Drehende elektrische Maschine nach einem der Ansprüche 1 bis 8, **dadurch gekennzeichnet, dass** der Rotor (11) ein Dauermagnetrotor, ein gewickelter Rotor oder ein gemischter Rotor ist.

10. Drehende elektrische Maschine nach einem der Ansprüche 1 bis 9, **dadurch gekennzeichnet, dass** sie eine Betriebsspannung von weniger als 60 Volt aufweist.

## Claims

1. Rotating electric machine for a motor vehicle, comprising:
- a rotor (11) having an even number of pole pairs,
- a stator (10) comprising a body (13) provided with slots (Ei) and a three-phase winding (14) inserted into said slots (Ei) of said stator body (13), said three-phase winding (14) comprising:
- at least a first group (G1) of portions of phases (U, V, W) and a second group (G2) of portions of phases (U, V, W) associated with a first set of at least three bridge arms (21.1), and
- at least a third group (G3) of portions of phases (U, V, W) and a fourth group (G4) of portions of phases (U, V, W) associated with a second set of at least three bridge arms (21.2), **characterized in that** each portion of phase (U, V, W) of the first group (G1) is respectively connected in series to each portion of phase (U, V, W) of the second group (G2), each portion of phase (U, V, W) of the third group (G3) being respectively connected in series to each portion of phase (U, V, W) of the fourth group (G4), and wherein, along a circumference of the stator (10), there is an alternation between a group (G1, G2) of portions of phases of the first set of bridge arms (21.1) and a group (G3, G4) of portions of phases of the second set of bridge arms (21.2).

2. Rotating electric machine according to Claim 1, **characterized in that** each group (G1, G2, G3, G4) of portions of phases (U, V, W) comprises, in at least one and the same slot (Ei), two conductors (20) belonging to different phases (U, V, W).

3. Rotating electric machine according to Claim 1 or 2, **characterized in that** each group (G1, G2, G3, G4) of portions of phases (U, V, W) comprises at least two conductors (20) belonging to one and the same phase (U, V, W) in at least two adjacent slots (Ei).

4. Rotating electric machine according to any one of Claims 1 to 3, **characterized in that** the number of slots (Ei) per pole and per phase (U, V, W) is strictly greater than 1 and less than or equal to 3.

5. Rotating electric machine according to Claim 4, **characterized in that** the number of slots (Ei) per pole and per phase (U, V, W) is equal to 2.5.

6. Rotating electric machine according to any one of Claims 1 to 5, **characterized in that**, for a three-phase stator (10) comprising four groups (G1, G2, G3, G4) of portions of phases, the groups of portions of phases associated with one and the same set of bridge arms (21.1, 21.2) are diametrically opposite to one another.

7. Rotating electric machine according to any one of Claims 1 to 6, **characterized in that** the rotor (11) comprises a number of pairs of poles selected from: 4, 6, 8, 10 or 12.

8. Rotating electric machine according to any one of Claims 1 to 7, **characterized in that** the winding (14) is in the form of pins comprising a cross section of substantially rectangular shape.

9. Rotating electric machine according to any one of Claims 1 to 8, **characterized in that** the rotor (11) is a permanent-magnet rotor, a wound rotor or a mixed rotor.

10. Rotating electric machine according to any one of Claims 1 to 9, **characterized in that** it has an operating voltage of less than 60 volts.
